# EUROPEAN PATENT SPECIFICATION

(11) **EP 3 735 377 B1**
(45) Date of publication and mention of the grant of the patent: **05.03.2025**
(21) Application number: 19700060.7
(22) Date of filing: 04.01.2019
(51) Int. Cl.: B63J 4/00, C02F 1/02

(54) **METHOD AND SYSTEM FOR MANAGEMENT OF BALLAST WATER OF A VESSEL DURING VOYAGE**
VERFAHREN UND SYSTEM ZUR VERWALTUNG VON BALLASTWASSER EINES SCHIFFS WÄHREND DER FAHRT
PROCÉDÉ ET SYSTÈME DE GESTION D'EAU DE BALLAST D'UN NAVIRE PENDANT UN VOYAGE

(30) Priority: 05.01.2018 EP 18150510
(43) Date of publication of application: 11.11.2020
(73) Proprietor: Bawat A/S, 2970 Hørsholm (DK)
(72) Inventor: CHRISTENSEN, Ole Lüthcke, 2800 Kgs. Lyngby (DK); ANDREASEN, Klaus Hjortebjerg, 2900 Hellerup (DK)
(74) Representative: Guardian IP Consulting I/S
(86) International application number: PCT/EP2019/050147
(87) International publication number: WO 2019/134961

(56) References cited:
- WO-A1-2013/004240
- WO-A2-2015/104341
- US-A1- 2010 006 490
- US-A1- 2014 042 062
- US-A1- 2015 298 990

## Description

The present invention relates to systems and methods for management of ballast water of a vessel during voyage.

Vessels, such as ships or any other naval constructions, are usually provided with one or more ballast tanks that are configured to hold water. Water which is held by a ballast tank is usually denoted ballast water. For obtaining a desired amount and/or distribution of ballast, the amount of ballast water in a ballast tank may be adjusted, e.g. by loading or discharging a desired amount of ballast water into or out of the ballast tank, e.g. from or to the water surrounding the vessel. Such loading and discharge may be carried out by means of a ballast pump and pipes providing fluid communication between the one or more ballast tank of the vessel and the water surrounding the vessel.

Water, which is to be loaded into a ballast tank, as well as water, which has been discharged from a ballast tank, may as well be denoted ballast water. Accordingly, the term "ballast water of a vessel" may be understood as water that has been used for ballasting the vessel and/or water that is intended to and/or about to be used for ballasting the vessel. The term "ballast water of a vessel" may be understood as water that has been within one or more ballast tanks of the vessel and/or water that is intended to and/or about to enter one or more ballast tanks of the vessel.

The purpose of ballast tanks is to enable the vessel to maintain and/or achieve stability and/or to obtain a desired level of buoyancy as well as a desired center of gravity. The desired amount of ballast water within the one or more ballast tanks of a vessel may for instance depend on whether the vessel is carrying cargo or not, as well as the nature of such cargo. The process of loading ballast water into a vessel may be denoted ballasting. The term ballasting may be used irrespectively of whether there is a net intake of ballast water into the respective vessel or not. For instance, one ballast tank may be loaded with ballast water while ballast water is being discharged from another ballast tank. The process of discharging ballast water from a vessel may be denoted de-ballasting. The term de-ballasting may be used, irrespectively of whether there is a net discharge of ballast water from the respective vessel or not.

The water that is being used for ballasting a vessel is usually taken from the water surrounding the respective vessel, e.g. while at port, which water usually contains live microorganisms, such as various forms of plankton, bacteria, etc.

Vessels, such as cargo vessels, may travel vast distances over the ocean, e.g. from one cargo port to another. Accordingly, when a vessel is de-ballasting, water containing live microorganisms that may originate from the waters of a distant part of the world may be discharged into the local part of the waters surrounding the vessel. Accordingly, such discharge of ballast water into surrounding waters may potentially introduce undesired microorganisms, or an undesired amount hereof, into the marine environment of the location of the discharge. Live microorganisms from another part of the world may be a threat to the local marine life of the location of discharge.

Every year, ocean going vessels move billions of cubic meters of water containing live microorganisms from one part of the world to another. Accordingly, such vessels constitute a contributing factor in the introduction of hundreds of invasive marine species to new environments which is considered to be a challenging environmental issue.

According to certain national and/or international agreements, conventions, and laws, such as drawn up by the International Maritime Organization (IMO), it is required, or it may be required, that ballast water, which is being discharged from a vessel, complies with certain standards, such as defining one or more upper thresholds for the concentration of living microorganisms allowed in the discharged ballast water. These thresholds may vary between different countries/regions and/or may change with time.

A required maximum concentration threshold level of microorganisms in the discharged ballast water may be complied with by treating the ballast water applying appropriate techniques in order to reduce the content of microorganism at some point prior to de-ballasting. Different systems and methods for treatment of ballast water exist, e.g. utilizing heat treatment - also known as pasteurization. Other examples comprise use of UV-light irradiation or treatment by addition of chlorine containing substances, both of which may require a filter, such as a 50 µm filter, i.e. a filter configured to filter particles of 50 µm and larger, e.g. for filtering some of the larger particles containing living organisms that otherwise may survive such treatment. Treatment by pasteurization may have the advantage of usually not requiring such filter.

WO2016083470, WO2016113156, WO2015104341, WO2012116698, and WO2012116704 describe various systems and methods for treatment of ballast water.

The inventors of the present invention have realized a need for improved systems and methods for management of ballast water of a vessel.

According to a first aspect of the present invention there is provided a method for management of ballast water of a vessel during voyage, as in claim 1.

According to a second aspect useful for understanding the present invention there is provided a ballast water management system of a vessel, wherein the ballast water management system comprises a treatment system configured for treatment of ballast water, such as heat treatment of ballast water, and wherein the ballast water management system may be configured for treatment of ballast water of any ballast tank of the vessel. The vessel may comprise a ballast pump configured for providing ballast water to the vessel and/or discharging ballast water from the vessel. The ballast water management system according to the second aspect comprises a treatment pump having a capacity being lower than the capacity of the ballast pump, such as being at most 50% of the capacity of the ballast pump. The treatment pump may be configured for providing a flow of ballast water through the treatment system.

According to a third aspect useful for understanding the present invention there is provided a method for management of ballast water of a vessel during voyage, the method comprising: obtaining a treatment status database comprising treatment status for one or more ballast tanks of the vessel, such as each ballast tank of the vessel; and utilizing information from the treatment status database for carrying out one or more ballast water operations during voyage. The one or more ballast water operations comprises: discharging and loading ballast water from and to the vessel during voyage, e.g. via a treatment system configured for treatment of ballast water for both or one of discharging and loading; and/or transferring ballast water between ballast tanks of the vessel during voyage, e.g. via the treatment system.

According to a fourth aspect useful for understanding the present invention there is provided a method for management of ballast water of a vessel during voyage, the method comprising: depleting ballast water of a first ballast tank of the vessel, e.g. via a treatment system configured for treatment of ballast water; and, subsequently, loading ballast water to the first ballast tank via the treatment system.

According to a fifth aspect useful for understanding the present invention there is provided a ballast water management system of a vessel, wherein the ballast water management system comprises a treatment system configured for treatment of ballast water, such as heat treatment of ballast water, and wherein the ballast water management system is configured for: discharging ballast water from the vessel during voyage to the surrounding waters via the treatment system; and loading ballast water during voyage from the surrounding waters to the vessel, e.g. via the treatment system.

Provision of the process of discharging ballast water from the vessel to the surrounding waters, e.g. via the treatment system; and subsequent the process of loading ballast water from the surrounding waters to the vessel, e.g. via the treatment system, may facilitate transfer of ballast water between ballast tanks of the vessel, e.g. via the treatment system, which in turn may facilitate a less time-consuming and/or more economic ballast water management solution compared to prior art solutions.

Management of ballast water of a vessel during voyage according to the present invention may provide several advantages compared to the prior art, such as in particular compared to, but not necessarily limited to, prior art methods and systems configured for treatment of ballast water while the vessel is at port, such as during ballasting and/or de-ballasting the vessel while at port. These advantages of the present invention may comprise any of the following: the time allowed for the treatment process is usually longer; a malfunction of the treatment system may be less critical since appropriate measures, such as repair of the system, may be managed in due time; utilization of surplus heat from propelling the vessel for heat treatment of the ballast water may facilitate improved energy efficiency and/or more cost effectiveness.

Treatment of ballast water may be carried out during ballasting or during de-ballasting. As an alternative to treatment during ballasting or treatment during de-ballasting, treatment may be carried out in-between ballasting and de-ballasting, e.g. by circulating ballast water of a ballast tank while treating the ballast water, such as disclosed by WO2012116704 and WO2012116698, or by moving ballast water from one ballast tank to another tank while treating the ballast water, such as disclosed by WO2015104341. These two modes of treatment may be denoted "circulation treatment" and "tank-to-tank-treatment", respectively. A disadvantage with the circulation treatment may be that it may require an increased amount of time, e.g. compared to the tank-to-tank-treatment or compared to the present invention, since the amount of ballast water being circulated for the circulation treatment of a ballast tank may be higher than the amount of ballast water being held by the respective tank, which is due to that the ballast water of a ballast tank may averagely be circulated more than once. A disadvantage with the tank-to-tank-treatment may be that it requires available ballast tank capacity, which may be mitigated according to the present invention. Furthermore, the tank-to-tank-treatment may cause an undesired shift in ballast properties of the vessel, which may be mitigated according to the present invention.

If compared to prior art solutions, the systems and/or methods according to the present invention may provide more time for carrying out a treatment process of ballast water and/or may have to treat a smaller amount of ballast water in order to achieve a desired goal, such as having a desired amount of treated ballast water being held by the vessel. Accordingly, the capacity and/or energy requirements of the treatment system utilized by the present invention may be mitigated.

The treatment system and/or the ballast water management system according to the present invention may be configured for a treatment rated capacity (TRC), e.g. as specified in a flag administration type approval certificate of the system. The treatment pump, e.g. if such forms part of the ballast water management system, may have and/or may be configured for a capacity corresponding to the TRC. The present invention may facilitate use of a treatment pump and/or a treatment system having a lower capacity than the ballast pump of the vessel. The present invention may facilitate use of a ballast pump having a higher capacity than the TRC of the treatment system and/or of the ballast water management system of the vessel.

The present invention may facilitate that any port operation of the vessel at port may be carried out as if the ballast water of the vessel would not need to be treated. This may for instance be in contrast to any prior art solutions configured for treating inline during ballasting and/or de-ballasting at port. The present invention may facilitate that any treatment of ballast water is only needed and is only carried out during voyage of the vessel. According to the present invention, there may not be any need for ballast water treatment while the vessel in question is at port. Accordingly, the present invention may mitigate any impact treatment of ballast water may have on ballasting and/or de-ballasting while at port.

Treatment of ballast water during ballasting/de-ballasting may limit the throughput of ballast water to/from the vessel in question compared to ballasting/de-ballasting without such ballast water treatment. Furthermore, a malfunction of the utilized treatment system may be time-critical if treating during ballasting/de-ballasting.

The present invention may mitigate the needed volume of ballast water to be treated and/or extend the available time for treatment of ballast water. This may enable use of a ballast water management system and/or a treatment system having a lower TRC. This in turn may facilitate a cost-effective solution.

Compared to prior art solutions, such as prior art solutions configured for treatment between ballast tanks of the vessel, the present invention may mitigate the impact that ballast water management may have on the ballast properties of the vessel in question during voyage.

The present invention may provide a cost-effective ballast water management system and a small ecological footprint while ensuring adequate ballast water treatment due to adequate scaling of the treatment system, e.g. compared to a treatment system having insufficient capacity or oversized capacity.

The present invention may facilitate handling and management of ballast water of a vessel. The third aspect may be combined with any of the first, second, fourth, and fifth aspect. Any of the first to fifth aspects may be combined with each other.

The present invention relates to different aspects including the systems described above and in the following and to methods, such as described above and in the following. Each aspect may yield one or more of the benefits and advantages described in connection with one or more of the other aspects, and each aspect may have one or more embodiments with all or just some of the features corresponding to the embodiments described in connection with one or more of the other aspects and/or disclosed in the appended claims.

Other systems, methods and features of the present invention will be or will become apparent to one having ordinary skill in the art upon examining the following drawings and detailed description. It is intended that all such additional systems, methods, and features be included in this description, be within the scope of the present invention and protected by the accompanying claims.

### Brief description of the drawings

The above, as well as additional objects, features and advantages of the present inventive concept, will be better understood through the following illustrative and non-limiting detailed description of preferred embodiments and/or features of the present inventive concept, with reference to the appended drawings, where like reference numerals may be used for like elements. The accompanying drawings are included to provide a further understanding of the invention, and are incorporated in and constitute a part of this specification. The drawings illustrate embodiments of the invention and, together with the description, serve to explain the principles of the invention. Other and further aspects and features may be evident from reading the following detailed description of the embodiments. The drawings illustrate the design and utility of embodiments, in which similar elements may be referred to by common reference numerals. These drawings are not necessarily drawn to scale. In order to better appreciate how the above-recited and other advantages and objects are obtained, a more particular description of the embodiments will be rendered, which are illustrated in the accompanying drawings. These drawings may only depict typical embodiments and may therefore not be considered limiting of its scope.
Fig. 1 schematically illustrates a first embodiment of ballasting system.
Fig. 2 schematically illustrates a first embodiment of a ballast water management system according to the present invention.
Fig. 3 schematically illustrates a second embodiment of a ballast water management system according to the present invention.
Fig. 4 schematically illustrates a third embodiment of a ballast water management system according to the present invention.
Fig. 5 schematically illustrates an embodiment of a treatment system, such as may be utilized according to the present invention.
Fig. 6 schematically illustrates an embodiment of a control system, such as may be utilized according to the present invention and/or may be utilized by an embodiment according to the present invention.
Figs. 7-12 schematically illustrate various embodiments of methods according to the present invention for management of ballast water of a vessel during voyage.

### Detailed description

The ballast water management system according to the present invention may be configured for treatment of ballast water of any ballast tank of the vessel. The ballast water management system according to the present invention may be configured for treatment of ballast water during transfer between any ballast tank of the vessel and the surrounding waters during voyage, i.e. in one direction or in both directions. The ballast water management system according to the present invention may be configured for treatment of ballast water during transfer between any ballast tanks of the vessel.

The ballast water management system or part thereof, such as at least comprising the treatment pump, may be fixedly installed on the vessel in question. The term "fixedly" may imply that the system or part thereof is welded to the vessel. The term "fixedly" may imply that the system or part hereof may be more than temporarily situated on the vessel. The term "temporarily" may be understood as less than a pre-determined time and/or with the intention of less than a pre-determined time. Such pre-determined time may be a week, two weeks, a months, or two months. The term "fixedly" may imply that the system or part thereof is situated on the vessel during an entire voyage, e.g. from one port to the next, and possibly while at port.

Management of ballast water of a vessel may comprise processing the ballast water such that the processed ballast water meets the Ballast Water Performance Standard in Regulation D-2 of the International Convention for the Control and Management of Ships' Ballast Water and Sediments (BWM Convention), being adopted 13 February 2004 and entered into force 8 September 2017, and/or another standard or threshold.

The term "during voyage" may refer to the period, such as any part of the period, from the vessel in question leaves a port and until the vessel in question arrives at the next port. The term "during voyage" may, additionally, refer to a period having an appropriate weather window enabling the method according to the present invention to be carried out in a safe manner.

Ballast water of a vessel may be understood as ballast water of any ballast tank of the vessel. Ballast water of a ballast tank may be understood as any ballast water that is held by that tank. Ballast water of a ballast tank may be understood as any ballast water that is held or that just has been held by that tank.

Discharging ballast water from the vessel to the surrounding waters may be understood as and/or may comprise transferring ballast water from one or more specific ballast tank of the vessel to the surrounding waters of the vessel. Discharging water from the vessel to the surrounding waters may be carried out by means of a pump unit, such as a ballast pump and/or a treatment pump. Alternatively, discharging water from the vessel to the surrounding waters may be carried out by utilizing gravity.

Discharge of ballast water from the vessel, and/or from a ballast tank of the vessel, via the treatment system, may be understood as and/or may comprise that the ballast water is being treated before being discharged, such as during transfer from one or more ballast tank of the vessel and e.g. to the surrounding waters of the vessel or to one or more other ballast tanks of the vessel. Ballast water being discharged and/or transferred via the treatment system may imply that the ballast water is being treated by the treatment system.

The treatment system configured for treatment of ballast water may be understood as and/or may comprise a system configured to process, i.e. treat, ballast water such that the ballast water meets the Ballast Water Performance Standard in Regulation D-2 of the BWM Convention and/or another standard or threshold.

Treatment of ballast water may be intended and/or configured for reducing the amount of living microorganisms to a level being below a required threshold. Living microorganisms may for instance comprise zooplankton, phytoplankton, and bacteria.

Loading ballast water from the surrounding waters to the vessel may be understood as and/or may comprise transferring ballast water from the surrounding waters of the vessel to one or more specific ballast tanks of the vessel. Loading ballast water from the surrounding waters to the vessel may be carried out by means of a pump unit, such as a ballast pump and/or a treatment pump. Alternatively, loading ballast water from the surrounding waters to the vessel may be carried out by utilizing gravity. Loading ballast water from the surrounding waters to the vessel may be carried out after the process of discharging ballast water from the vessel to the surrounding waters via the treatment system.

The ballast water management system useful for understanding the present invention, such as according to the second and/or fifth aspect, may comprise a treatment pump.

The method for management of ballast water according to the present invention may comprise use of a treatment pump.

The treatment pump may have a capacity of at most 75%, such as at most 60%, such as at most 50%, such as at most 40%, such as at most 30%, such as at most 25% of the capacity of the ballast pump of the vessel. The treatment pump may have a capacity of at least 5%, such as at least 10%, such as at least 15%, such as at least 20%, such as at least 25% of the capacity of the ballast pump of the vessel. Having a low capacity may facilitate a cost-effective solution. However, a lower capacity pump may also result in a ballast water treatment process taking longer for a given amount of water to be treated. Accordingly, the desired capacity, e.g. of the treatment pump, may be regarded as a compromise.

The capacity of the ballast pump of the vessel may refer to the capacity one single ballast pump of the vessel or a combined capacity of a plurality of ballast pumps of the vessel.

Obtaining a treatment status database may be understood as providing at least one entry, such as information relating to one particular ballast tank of the vessel, into the treatment status database and/or may be understood as acquiring access to the treatment status database.

A treatment status may for instance comprise information as to whether any water held by a ballast tank is treated ballast water or untreated ballast water.

Utilizing information from the treatment status database for carrying out one or more ballast water operations during voyage may for instance comprise using information of whether any water held by a ballast tank is treated ballast water or untreated ballast water.

The method according to the present invention may comprise transferring ballast water from one or more ballast tanks comprising untreated ballast water to the first ballast tank via the treatment system. Transferring ballast water from one or more ballast tanks comprising untreated ballast water to the first ballast tank via the treatment system may comprise loading ballast water to the first ballast tank via the treatment system. Accordingly, the process of discharging ballast water from the vessel to the surrounding waters via the treatment system and/or the process of loading ballast water from the surrounding waters to the vessel, both provided according to the first aspect of the present invention, may be absent according to the fourth aspect, e.g. if compared to the first aspect of the present invention.

A ballast water management system according to the present invention may be and/or may comprise a system configured to process, i.e. treat, ballast water such that the ballast water meets the Ballast Water Performance Standard in Regulation D-2 of the BWM Convention and/or another standard or threshold.

Treated ballast water may be defined and/or understood as water that meets the Ballast Water Performance Standard in Regulation D-2 of the BWM Convention and/or another standard or definition. A standard may for instance be defined in terms of any one or more of the following: less than 10 viable organisms per m³ which are greater than or equal to 50 µm in minimum dimension; less than 10 viable organisms per ml which are between 10 µm and 50 µm in minimum dimension; less than 1 colony-forming unit (cfu) per 100 ml of Toxicogenic Vibrio cholerae; less than 250 cfu per 100 ml of Escherichia Coli; and less than 100 cfu per 100 ml of Intestinal Enterococci. Untreated ballast water may be defined and/or understood as water that does not meet the Ballast Water Performance Standard in Regulation D-2 of the BWM Convention. However, untreated ballast water may alternatively or additionally refer to water, which has not been treated during intake by the vessel or while being contained by the vessel. Accordingly, any ballast water which is contained, is about to be contained, or has been contained by a vessel, and which has not been treated according to an approved method or system for treatment of ballast water, may be denoted "untreated ballast water" irrespectively of whether the respective amount water does meet the Ballast Water Performance Standard in Regulation D-2 of the BWM Convention and/or another standard or none such standard. Likewise, "treated ballast water" may refer to any ballast water, which has been treated according to an approved method or system for treatment of ballast water, irrespectively of whether that particular amount of water does meet the Ballast Water Performance Standard in Regulation D-2 of the BWM Convention and/or another standard or none such standard.

The term "ballast water" may refer to water that is contained, is about to be contained, or has been contained by a ballast tank of the vessel in question.

The method according to the present invention may comprise depleting ballast water of a ballast tank, such as the first ballast tank, of the vessel. Depletion of a ballast tank may result in the ballast tank being substantially empty, such as containing less than 4 %, such as less than 3 %, such as less than 2 %, such as less than 1 %, volume of water of the total capacity of the ballast tank in question. Depletion of a ballast tank may comprise that the ballast water of the ballast tank in question is discharged e.g. until suction of a pump unit used is lost and/or until the flow of water from the ballast tank in question has stopped. Depletion of a ballast tank may comprise that a stripping pump and/or eductor is utilized.

The method according to the present invention, in particular if comprising depleting ballast water of a ballast tank of the vessel, may require careful planning and monitoring by the vessel's staff to mitigate risks to the ship in respect of any one of the following: longitudinal strength; dynamic loads; excessive trim; bottom forward slamming; propeller emergence; intact stability; and bridge visibility.

Depleting a first ballast tank may facilitate provision of treated ballast water within the first ballast tank.

Depleting a first ballast tank during voyage may mitigate requirements for capacity of the treatment system and/or the ballast water management system utilized.

The method according to the present invention may comprise loading and discharging a first amount of ballast water to and from a ballast tank, such as the first ballast tank, after the process of depleting ballast water of the ballast tank in question. The process of loading and discharging a first amount of ballast water to and from a depleted ballast tank may be denoted a cleaning action of the ballast tank in question. The first amount of ballast water may, at least initially, i.e. while being loaded into the first ballast tank, be regarded as treated ballast water. Once the first amount of ballast water, or part thereof, is within the ballast tank in question, it may no longer be regarded as treated ballast water, since the introduced amount of water may have been mixed with water residing in the ballast tank in question, which residing ballast water may have been untreated ballast water. Accordingly, a ballast tank may contain fewer living organisms after the cleaning action than immediately after depleting the ballast tank in question. This in turn may facilitate an improved ballast water management system and method.

The cleaning action may be carried out by flushing and/or rinsing and/or diluting followed by a discharge of the water from the tank in question.

The first amount of treated ballast water may be at least five, such as at least 10, times the amount of ballast water receding in the respective ballast tank immediately after the process of depleting ballast water of the respective ballast tank, such as the first ballast tank. Alternatively, or additionally, the first amount of treated ballast water may correspond to at least two percent, such as at least five percent, such as at least 10 percent, of the volume of the respective ballast tank, such as the first ballast tank. The volume of a ballast tank may be denoted "capacity". The first amount of treated ballast water may be less than 20, such as less than 15, times the amount of ballast water receding in the respective ballast tank immediately after the process of depleting ballast water of the respective ballast tank, such as the first ballast tank. Alternatively, or additionally, the first amount of treated ballast water may correspond to less than 20 percent, such as less than 15 percent, of the volume of the respective ballast tank, such as the first ballast tank.

The process of loading and discharging, i.e. the cleaning action, may be carried out iteratively, i.e. e.g. twice, three times, four times, or more. For instance, the loading and discharging may be carried out iteratively by being carried out twice, wherein, for instance, a first part of the first amount of treated ballast water is loaded to and subsequently discharged from the first ballast tank, where after a second part of the first amount of treated ballast water is loaded to and subsequently discharged from the first ballast tank. The first and second part of the first amount of treated ballast water may add up to the first amount of treated ballast water.

At least part of the first amount of treated ballast water may be from one or more other ballast tanks of the vessel different from the ballast tank being subject to the cleaning action. For instance, this one or more other ballast tanks may comprise treated ballast water. Alternatively, water from this one or more other ballast tanks may be treated via the treatment system during transfer to the ballast tank being subject to the cleaning action, such as the first ballast tank. Alternatively, or additionally, at least part of the treated ballast water may be from the surrounding waters and may be provided to the respective ballast tank, such as the first ballast tank, via the treatment system.

The discharging part of the cleaning action may comprise transferring from the ballast tank being subject to the cleaning action, such as the first ballast tank, to one or more other ballast tanks of the vessel, which one or more other ballast tanks may not contain treated ballast water. The discharging part of the cleaning action may comprise discharging to the surrounding waters, e.g. via the treatment system. The discharging part of the cleaning action may comprise transfer to another ballast tank comprising treated ballast water via the treatment system.

The process of discharging ballast water from the vessel to the surrounding waters via the treatment system may comprise discharging ballast water of the first ballast tank to the surrounding waters via the treatment system.

The process of discharging ballast water of the first ballast tank to the surrounding waters via the treatment system may be carried out such that the first ballast tank is depleted to the surrounding waters via the treatment system. Alternatively, the process of discharging ballast water of the first ballast tank to the surrounding waters via the treatment system may be carried out such that the first ballast tank is partly depleted to the surroundings waters via the treatment system and partly depleted to one or more other locations, such as one or more other ballast tank of the vessel, e.g. via the treatment system or bypassing the treatment system, e.g. individually depending on whether the one or more other ballast tanks being transferred to, i.e. from the first ballast tank, comprises treated ballast water or untreated ballast water or is void of ballast water, such that the first ballast tank is depleted.

Depleting the first ballast tank via the treatment system to the surrounding waters may facilitate a simple operation and/or may be needed in case any transfer to any other ballast tank of the vessel is not possible or not desired.

A partial depletion to the surrounding waters in combination with a partial depletion to one or more other ballast tanks of the vessel may at least in part mitigate any issues on the ballast properties of the vessel. Additionally, or alternatively, such combination of partial depletions, i.e. adding up to a full completion, may facilitate that the required total amount of ballast water that needs to be treated is mitigated.

The method according to the present invention may comprise transfer of ballast water of one or more ballast tanks, such as of the first ballast tank, to one or more other ballast tanks of the vessel. This may at least in part mitigate any issues on the ballast properties of the vessel. Additionally, or alternatively, it may facilitate that the required total amount of ballast water that needs to be treated is mitigated. The transfer may e.g. be via the treatment system or bypassing the treatment system, e.g. depending on whether the one or more other ballast tanks being transferred to from the first ballast tank contains treated ballast water or untreated ballast water or is void of ballast water and/or depending on whether the one or more ballast tanks being transferred from contains treated ballast water or untreated ballast water. The one or more other ballast tanks may comprise a second ballast tank.

Ballast water being transferred from one ballast tank being depleted to another ballast tank may be to an adjacent ballast tank. The second ballast tank may be adjacent to the first ballast tank. Transfer to an adjacent ballast tank may at least in part mitigate any issues on the ballast properties of the vessel. It may be assumed that the ballast water of a ballast tank, such as the first ballast tank, is there for optimal ballast properties of the vessel. Hence by transferring to an adjacent ballast tank, the change in ballast properties may be smaller than if transferred to a ballast tank being further from the first ballast tank than any adjacent ballast tank. However, for one or more embodiments, the second ballast tank may be non-adjacent to the first ballast tank.

The process of discharging ballast water from the vessel to the surrounding waters via the treatment system may comprise discharging a second amount of ballast water from the vessel to the surrounding waters via the treatment system. Furthermore, the process of loading ballast water from the surrounding waters to the vessel may comprise loading the second amount of ballast water from the surrounding waters to the vessel. This may not necessarily imply that the water being discharged is the same as the water being loaded, only that the amount is the same or substantially the same. Accordingly, the same or similar ballast properties are obtained after carrying out the present invention as prior to carrying out the present invention.

The amount of ballast water being loaded to the vessel from the surrounding waters during the process of loading ballast water from the surrounding waters to the vessel may correspond to the amount of ballast water being discharged from the vessel to the surrounding waters during the process of discharging ballast water from the vessel to the surrounding waters via the treatment system. The amount of ballast water being loaded to the vessel from the surrounding waters while carrying out the method may correspond to the amount of ballast water being discharged from the vessel to the surrounding waters while carrying out the method. Accordingly, the same or similar ballast properties are obtained after carrying out the present invention as prior to carrying out the present invention.

The method according to the present invention may be carried out such that the vessel has the same amount and/or distribution, e.g. distribution in percent, of ballast water after the process of loading ballast water from the surrounding waters to the vessel as prior to the process of discharging ballast water from the vessel to the surrounding waters via the treatment system.

The process of loading ballast water from the surrounding waters to the vessel may comprise loading ballast water from the surrounding waters to the vessel via the treatment system.

The method according to the present invention may comprise transferring ballast water from one or more ballast tanks comprising untreated ballast water to a depleted ballast tank, such as the first ballast tank, via the treatment system. This may facilitate the treatment process, such as by mitigating the required amount of ballast water to be treated in order to obtain a desired amount of treated ballast water contained by the vessel. The process of transferring may be carried out in between the process of discharging ballast water from the vessel to the surrounding waters via the treatment system and the process of loading ballast water from the surrounding waters to the vessel.

The method according to the present invention may comprise repeated transfer, via the treatment system, of ballast water from a ballast tank comprising untreated ballast water to a depleted ballast tank and/or to a ballast tank being partially filled with treated ballast water. For instance, for a vessel comprising at least 3 ballast tanks, such as comprising a first, second, and third ballast tank, ballast water of the first ballast tank may be depleted, where after ballast water may be transferred from the second ballast tank to the first ballast tank via the treatment system, e.g. such that the second ballast tank is depleted, where after ballast water may be transferred from the third ballast tank to the second ballast tank via the treatment system. The plurality of transferrals of ballast water may be carried out in between the process of discharging ballast water from the vessel to the surrounding waters via the treatment system and the process of loading ballast water from the surrounding waters to the vessel. For instance, for the above-described example, the process of transferring ballast water from the second ballast tank to the first ballast tank may be preceded by discharging ballast water from the first ballast tank to the surrounding waters via the treatment system, e.g. such that the first ballast tank is depleted. The process of transferring ballast water from the third ballast tank to the second ballast tank may be succeeded by loading ballast water from the surrounding waters to the third ballast tank, e.g. by loading via the treatment system.

The process of transferring ballast water from one or more ballast tanks comprising untreated ballast water, e.g. to a depleted ballast tank, e.g. such as to the first ballast tank, or e.g. subsequently to another ballast tank, via the treatment system may comprise transferring from a ballast tank being adjacent to the ballast tank being transferred to, such as the first ballast tank. This may mitigate undesired risks with respect to the ballast properties of the vessel.

The method according to the present invention may be carried out such that at least a third amount of treated ballast water is contained by the vessel after the process of loading ballast water from the surrounding waters to the vessel. The third amount of treated ballast water may correspond to an amount of ballast water to be discharged at the forthcoming port operation of the vessel. The third amount of ballast water may comprise treated ballast water being held by the vessel prior to carrying out the method according to the present invention. It may be desired that all tanks do not contain treated ballast water after the operation. For instance, only those ballast tanks, which are supposed to be discharged from at next port operation of the vessel, may be desired to contain treated ballast water. Alternatively, or additionally, only the volume of ballast water to be discharged at next port operation of the vessel may be desired to be treated ballast water. Accordingly, the required amount of ballast water to be treated may be mitigated. This in turn may provide a more cost-effective solution.

The method may be carried out such that all ballast water contained by the vessel after the process of loading ballast water from the surrounding waters to the vessel is treated ballast water. This may mitigate ballast water discharge constraints during a forthcoming port operation.

The treatment system utilized for the method and/or the ballast water management system according to the present invention may be configured for heat treatment of ballast water. Heat treatment of ballast water may also be known as pasteurization. Heat treatment of ballast water may comprise heating the ballast water to an appropriate temperature and keeping the ballast water at the appropriate temperature, or close thereto, for an appropriate amount of time. A treatment system configured for heat treatment may be denoted "heat treatment system".

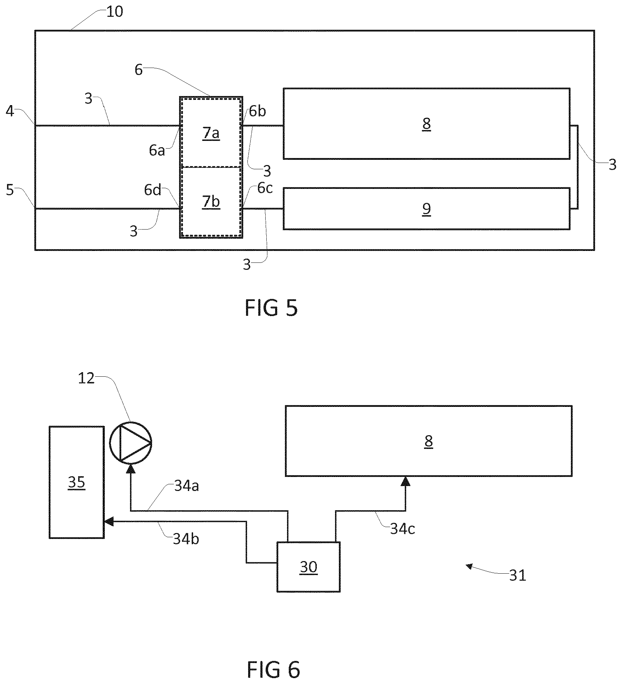

The present and following paragraphs comprise references to Fig. 5, which are provided as a mere example and for aid in understanding the present invention. The treatment system 10 may comprise a treatment system inlet 4 and a treatment system outlet 5. The treatment system 10 may comprise a heat application section 8 configured for applying heat to the ballast water, such that the ballast water that is flowing through the heat application section 8 is heated. The treatment system 10 may comprise a heat recovering section 6 configured for recovering heat from the heated water, the heat recovering section 6 comprising a first part 7a and a second part 7b configured for exchanging heat from one part to the other. The treatment system 10 may comprise a treatment piping system 3 coupling the treatment system inlet 4 to the treatment system outlet 5 via: the first part 7a of the heat recovering section 6; the heat application section 8; and the second part 7b of the heat recovering section 6. The treatment system 10 may provide that the ballast water may flow from the treatment system inlet 4 to the first part 7a of the heat recovering section 6. The treatment system 10 may provide that the ballast water may flow from the first part 7a of the heat recovering section 6 to the heat application section 8. The treatment system 10 may provide that the ballast water may flow from the heat application section 8 to the second part 7b of the heat recovering section 6. The treatment system 10 may provide that the ballast water may flow from the second part 7b of the heat recovering section 6 to the treatment system outlet 5. Accordingly, the treatment system 10 may provide that the ballast water may flow through the following: the first part 7a of the heat recovering section 6; the heat application section 8; and the second part 7b of the heat recovering section 6. The heat recovering section 6 may be configured for exchanging, i.e. transferring, heat such that the ballast water, which is flowing through the second part 7b of the heat recovering section 6, is pre-heating the ballast water, which is flowing through the first part 7a of the heat recovering section 6. Accordingly, heat may be recovered.

The heat recovering section 6 may comprise: a primary inlet 6a; a primary outlet 6b; a secondary inlet 6c; and a secondary outlet 6d. The primary outlet may be coupled to the secondary inlet via the heat application section 8. The primary inlet may be coupled to the treatment system inlet 4 of the treatment system. The secondary outlet may be coupled to the treatment system outlet 5 of the treatment system. The heat recovering section 6 may comprise a heat exchanger. Any heat exchanger being provided and/or utilized according to the present invention may comprise a plate heat exchanger.

Ballast water, which is flowing from the treatment system inlet 4 towards the heat application section 8, may be pre-heated prior to entering the heat application section 8 by means of the heat recovering section 6. Accordingly, less heat may need to be applied to the ballast water within the heat application section 8 for heating the ballast water to a desired temperature than if the ballast water is not pre-heated by such heat recovering section 6 prior to entering the heat application section 8.

The treatment system 10 may comprise a detention section 9. The treatment piping system 3 may be coupling the treatment system inlet 4 to the treatment system outlet 5 via the detention section 9. Accordingly, the ballast water may flow from the heat application section 8 to the second part 7b of the heat recovering section 6 via the detention section 9. The detention section 9 may be configured for detaining the ballast water flowing through the detention section 9 for a pre-determined average detention time by having the heated water, which is flowing from the heat application section 8 to the heat recovering section 6, being detained, such that the heated water is kept heated for the pre-determined average detention time. The step of providing a flow of the ballast water from the treatment system inlet 4 towards the treatment system outlet 5 may comprise providing the flow via a detention section 9. The method according to the present invention may comprise detaining the ballast water at the detention section 9 for a pre-determined average detention time by having the heated water, which is flowing from the heat application section 8 towards the heat recovering section 6, being detained, such that the heated water is kept heated for the pre-determined average detention time. The detention section 9 may be provided by means of a water container. The average detention time may for instance be at least 30 seconds, such as at least 60 seconds. The desired temperature and time may be related to each other. The average detention time may for instance be controlled by the flow rate and or by the type and/or setting of the detention section 9.

It may be an object of the present invention to provide heat treatment at a temperature and for a period of exposure that kills a certain amount / percentage of living organisms within the ballast water. The higher the temperature, the lower time may be required, and vice versa. If the temperature is adequately high, then the required time may be obtainable by piping connecting the heat application section 8 to the second part 7b of the heat recovering section 6. The first part 7a of the heat recovering section 6 may be considered as forming part of the heat application section 8.

According to the present invention the ballast water of the vessel may be heated at the heat application section 8, such that the ballast water reaches a desired temperature. The method may comprise heating the ballast water at the heat application section 8, such that the ballast water reaches a desired temperature. The desired temperature may for instance be at least 60 °C, at least 65 °C, at least 70 °C, at least 75 °C, at least 80 °C, at least 85 °C, or at least 90 °C.

Heat applied by the heat application section 8 may at least in part be provided by surplus heat sources of the vessel - e.g. main engine jacket cooling water or exhaust heat economizers through steam or thermal oil systems.

It may be an advantage that by using the heat treatment according to the present invention there may be no need for filtration, such as pre-treatment filtration. Furthermore, there may be no need for a sludge tank and/or a waste tank.

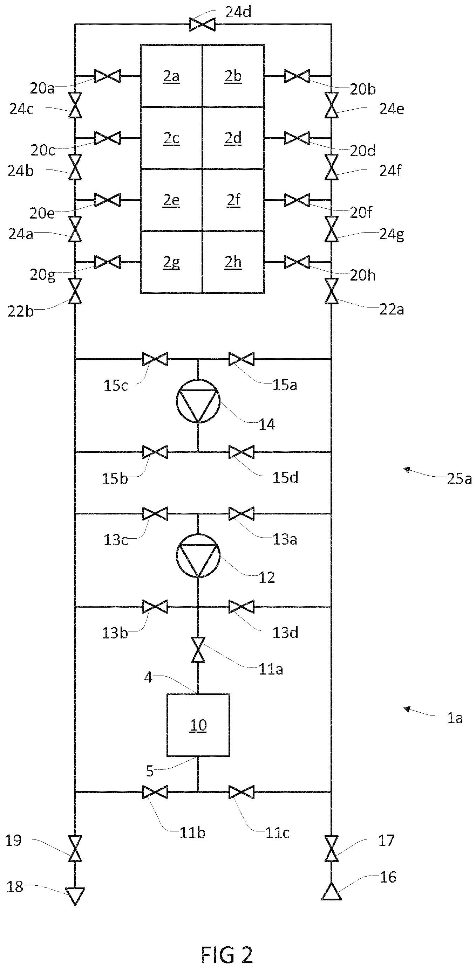

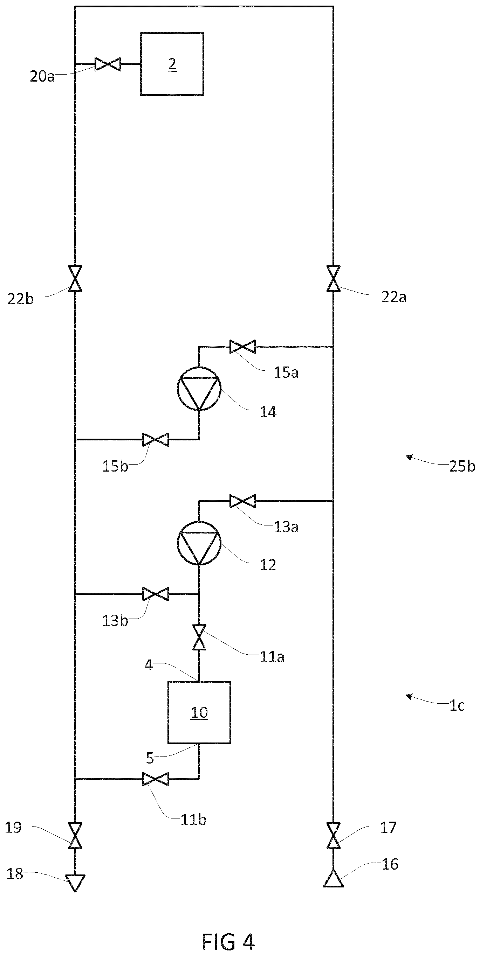

The treatment system and or the ballast water management system may not comprise, i.e. may be void of, a filter section configured to filter particles of a "desired size-limit" from the ballast water, e.g. while the ballast water is flowing between the treatment system inlet 4 and the treatment system outlet 5 (cf. Figs. 2 and 4 as mere examples). The method according to the present invention may be void of a step wherein the ballast water is filtered using a filter section configured to filter particles of a "desired size-limit", e.g. while the ballast water is flowing between the treatment system inlet 4 and the treatment system outlet 5. Accordingly, such limitation does not exclude the ballast water from being filtered using a filter section configured to filter particles of larger than the "desired size-limit" while flowing between the treatment system inlet 4 and the treatment system outlet 5. A filter may aid in removal of living microorganisms. However, a filter may clog, which may render a water treatment system using a filter vulnerable. Accordingly, it may be an advantage to provide a system without a filter, such as of a "desired size-limit". A filter having a small filter size may allow for removal of more and smaller living organisms from the ballast water than a larger filter size does. However, a small filter size may clog more easily than a filter having a large filter size and the flow rate may be lower.

The present invention may comprise the limitation of not being filtered using a filter section configured to filter particles of a "desired size-limit" immediately before the step of applying heat to the ballast water.

Ballast water being loaded to the vessel may not be filtered using a filter section configured to filter particles of a "desired size-limit" immediately before the ballast water being subject to the heat treatment. A desired size-limit may for instance be 25 µm, 45 µm, or 90 µm.

In particular for ballast water management during voyage, it may be an advantage to provide a system and a method that does not require filtration, such as described above.

The vessel may comprise a ballast pump configured for providing ballast water to the vessel and/or discharging ballast water from the vessel. The process of discharging ballast water from the vessel to the surrounding waters via the treatment system may be carried out using a treatment pump having a capacity being at most 50% of the capacity of the ballast pump. The capacity of a pump may refer to the volumetric flow rate, such as the maximum volumetric flow rate which the pump is capable of generating during use. A pump, such as the treatment pump and/or the ballast pump may be denoted "pump unit". The pump unit may be configured to provide ballast water at a pressure of 2 bar or more, e.g. at the treatment system inlet 4 (cf. Figs. 2 and 4 as mere examples).

With reference to Figs. 2-5 as mere examples, the ballast water management system may comprise a treatment pump, such as the treatment pump 12, configured for providing the flow of the ballast water between the treatment system inlet 4 and the treatment system outlet 5. The method according to the present invention may comprise providing the flow of the ballast water between the treatment system inlet 4 and the treatment system outlet 5 using a treatment pump. Usage of a treatment pump may enable the ballast water management system to operate independently of other pumps, such as the ballast pump, compared to if no treatment pump is provided. The treatment pump may be provided prior to the treatment system according to the direction of flow. Accordingly, provision of a required and/or desired pressure at a location where it is needed may be facilitated. For instance, the flow of water through the heat recovering section 6 may induce a fall in pressure.

The system and/or the method and/or the treatment pump may be configured for a flow of the ballast water through the treatment system at a flow rate of at least 5 m³/h, such as at least 10 m³/h, such as at least 50 m³/h. In contrast, treatment of ballast water of a vessel during ballasting, or during de-ballasting while at port, may require a flow rate of about 100 m³/h to about 800 m³/h.

The ballast water management system may be configured to carry out any one, more, or all parts of any method according to the present invention. The ballast water management system may comprise a pump unit and a treatment system. The pump unit of the ballast water management system may comprise a treatment pump and/or a ballast pump. The pump unit and the treatment system may be in fluid communication with a pipe system of the vessel. The pipe system of the vessel may provide fluid communication between any ballast tank of the vessel and the surrounding waters during voyage, e.g. via and/or bypassing the treatment system.

With reference to Figs. 2-5 as mere examples, the ballast water management system may be configured for provision of an initial flow phase wherein a flow rate of the ballast water from the treatment system inlet 4 towards the treatment system outlet 5 is lower than during a subsequent flow phase. The process of providing a flow of the ballast water from the treatment system inlet 4 towards the treatment system outlet 5 via the heat application section 8 and via the heat recovering section 6 may comprise an initial flow phase, wherein the flow rate is lower than during a subsequent flow phase. An initial flow phase may in particular be advantageously during start-up of the system/method according to the present invention if utilizing a heat treatment system. The ballast water management system, if utilizing a heat treatment system, may be configured for provision of an initial heating phase wherein more heat is applied to the ballast water at the heat application section 8 than during a subsequent heating phase. The process of applying heat to the ballast water at the heat application section 8 may comprise an initial heating phase wherein more heat is applied than during a subsequent heating phase. An initial heating phase may in particular be advantageously during start-up of the system/method according to the present invention if utilizing a heat treatment system. Any one or more of the following may be variable / controllable: an initial flow rate; a subsequent flow rate; an initial heating rate; a subsequent heating rate.

The ballast water management system may comprise a control system configured for controlling one or more parts of the ballast water management system, such as one or more valves. The method according to the present invention may comprise use of such control system.

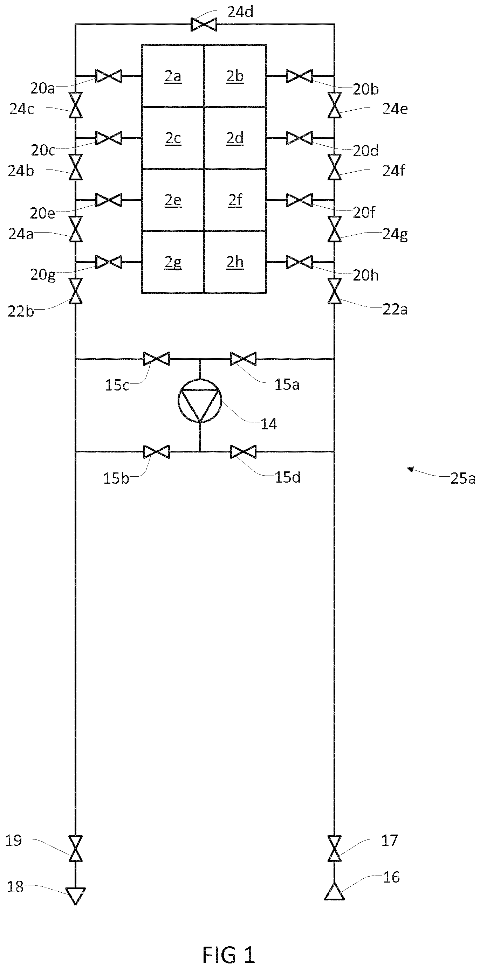

Fig. 1 schematically illustrates a first embodiment of ballasting system 25a configured for providing ballast water between, i.e. to or from, any of the ballast tanks 2 of a vessel (not illustrated) and the waters surrounding the vessel, or between any of the ballast tanks 2. The ballasting system 25a comprises:
14: ballast pump;
15a, 15b, 15c, and 15d: ballast pump valves, ref. 15: may refer to any one, more or all of: 15a, 15b, 15c, 15d;
16: ballast water intake of the vessel;
17: intake valve;
18: ballast water outlet of the vessel;
19: outlet valve;
20a, 20b, 20c, 20d, 20e, 20f, 20g, and 20h: ballast tank selector valves, ref. 20: may refer to any one, more or all of: 20a, 20b, 20c, 20d, 20e, 20f, 20g, 20h;
22a, 22b: flow direction valves, ref. 22: may refer to any one or both of: 22a, 22b; and
24a, 24b, 24c, 24d, 24e, 24f, and 24g: ballast tank separator valves, ref. 24: may refer to any one, more or all of: 24a, 24b, 24c, 24d, 24e, 24f, and 24g.

The ballasting system 25a is interconnected by piping as illustrated by lines between the respective elements of the ballasting system 25a. For one or more embodiments, the ballast water intake 16 and the ballast water outlet 18 may be provided by one common inlet/outlet. This may imply as well to any of the Figs. 2-4.

Fig. 2 schematically illustrates a first embodiment of a ballast water management system 1a useful for understanding the present invention, such as according to the second aspect and/or according to the fifth aspect. The ballast water management system 1a comprises:
10: treatment system, such as the heat treatment system 10 of Fig. 5;
11a, 11b, and 11c: treatment system valves, ref. 11: may refer to any one, more or all of: 11a, 11b, 11c;
12: treatment pump; and
13a, 13b, 13c, and 13d: treatment pump valves, ref. 13: may refer to any one, more or all of: 13a, 13b, 13c, and 13d.

The ballast water management system useful for understanding the present invention, such as the ballast water management system 1a, may for instance be connected to a ballasting system, such as 25a, which may already exist prior to provision of the ballast water management system, or which may be provided in combination e.g. during construction of the vessel in question. Accordingly, the parts of the ballasting system 25a, e.g. except from the ballast pump 14 and the valves 15 and the related piping, may be considered as forming part of the ballast water management system 1a or not.

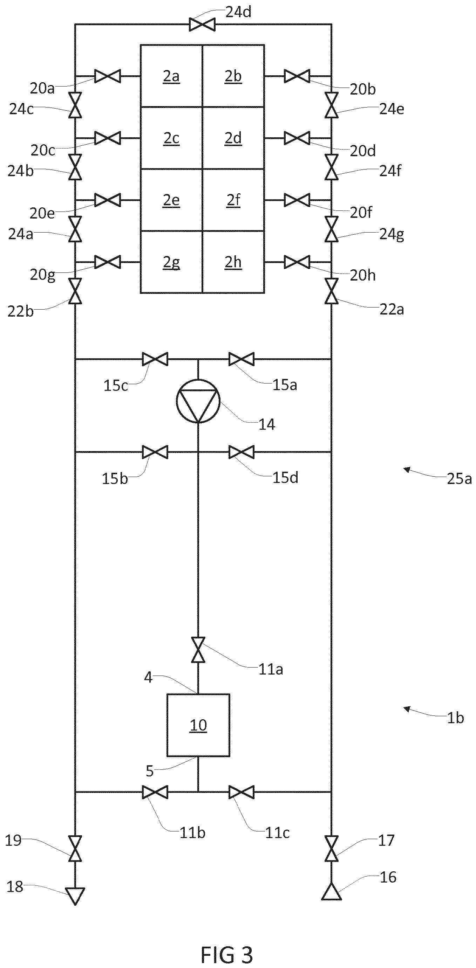

Fig. 3 schematically illustrates a second embodiment of a ballast water management system 1b useful for understanding the present invention, such as according to the fifth aspect. The embodiment 1b is similar to the embodiment 1a, but utilizes the ballast pump 14 instead of the treatment pump 12 for driving ballast water through the treatment system 10.

Fig. 4 schematically illustrates a third embodiment of a ballast water management system 1c useful for understanding the present invention, such as according to the second aspect and/or according to the fifth aspect. The ballast water management system 1c is similar to the system 1a, but the system 1c illustrates an example of a system for a vessel comprising a single ballast tank 2a. Accordingly, fewer valves and less piping may be needed for the system 1c compared to the system 1a.

Any of the embodiments 1a, 1b, 1c may be utilized for discharging, e.g. discharging in part or depleting, any amount of ballast water of any ballast tank 2 of the respective vessel via the treatment system 10, or by bypassing the treatment system 10, to the surrounding waters during voyage.

Any of the embodiments 1a, 1b, 1c may be utilized for loading, e.g. loading in part or filling, any amount of ballast water to any ballast tank 2 of the respective vessel via the treatment system 10, or by bypassing the treatment system 10, from the surrounding waters during voyage.

Any of the embodiments 1a, 1b may be utilized for transferring, e.g. in part or by depleting, any amount of ballast water from any ballast tank 2 of the respective vessel via the treatment system 10, or by bypassing the treatment system 10, to any other ballast tank 2 of the vessel.

The following examples may be carried out according to the present invention, e.g. using any of the embodiments 1a or 1b during voyage. In case all ballast tanks 2 are filled with untreated ballast water, or in case all ballast tanks contain ballast water, or merely if desired, one of the ballast tanks 2, e.g. 2a, may be depleted to the surrounding waters via the treatment system 10 during voyage. After the depletion of a ballast tank, such as the ballast tank 2a, the depleted ballast tank may be subject to a cleaning action using a first amount of ballast water, e.g. by being flushed/diluted/rinsed with the first amount of ballast water, e.g. taken from the surrounding waters via the treatment system 10, or from another ballast tank e.g. via the treatment system 10. The water used for the cleaning action may discharged from the ballast tank in question, e.g. by being discharged to the surrounding waters via the treatment system 10 and/or to another ballast tank of the vessel, e.g. via the treatment system 10. Subsequently, ballast water from another ballast tank, e.g. 2b, may be transferred to the ballast tank being depleted, such as 2a, via the treatment system 10, e.g. such that the ballast tank 2b is depleted. Subsequent transfer from another ballast tank, e.g. 2c, to a depleted ballast tank, e.g. 2b, via the treatment system 10, e.g. such that the ballast tank being transferred from is depleted, may be carried out e.g. until a desired, e.g. intermediately desired, amount of treated ballast water is contained by the vessel. Any transfer to a depleted ballast tank may be preceded by a cleaning action of the depleted ballast tank. Once a desired transfer of ballast water within the vessel is carried out, ballast water may be loaded to the vessel from the surrounding waters, e.g. via or bypassing the treatment system. The ballast water loaded to the vessel from the surrounding waters may for instance be provided to one or more ballast tanks having less or none ballast water as compared to the state of ballast water distribution of the vessel prior to carrying out the method according to the present invention, e.g. compared to the ballast water distribution being present while the vessel left the latest port.

In case all ballast tanks 2 of the vessel are not filled, it may be possible to obtain a depleted ballast tank by transferring some or all of the water contained by that particular ballast tank to one or more other ballast tanks of the vessel. Accordingly, it may not be needed to discharge ballast water to the surrounding waters in order to obtain a depleted ballast tank, or the amount of ballast water to be discharged from the vessel to the surrounding waters during voyage may be mitigated, which may mitigate negative impact on the ballast properties of the vessel. It may be an advantages of the embodiment 1a, e.g. for facilitation of control of the ballast water management system, that such transfer from one ballast tank to another ballast tank does not require use of the ballast pump 14, but can be carried out by means of the treatment pump, bypassing the treatment system 10. Once a ballast tank is depleted ballast water may be transferred to that ballast tank from one or more other ballast tanks via the treatment system, e.g. such that one or more of the other ballast tanks are depleted. As stated above, any transfer to a depleted ballast tank may be preceded by a cleaning action of the depleted ballast tank. The method for management of ballast water according to the present invention may comprise continued transfer via the treatment system of untreated ballast water to a depleted ballast tank or to a ballast tank comprising treated ballast water.

The method for management of ballast water according to the present invention may comprise transfer of treated or untreated ballast water between ballast tanks bypassing the treatment system 10. For instance, in case some or all ballast tanks 2 are partially, e.g. half, filled with untreated ballast water, and in case it is desired that some, e.g. three of these ballast tanks, e.g. 2c, 2d, and 2e contains treated ballast water, e.g. for the subsequent port operation, this may for instance be achieved as follows. Part, such as half of the ballast water of 2c may be transferred to 2d bypassing the treatment system. Part, such as half of the ballast water of 2c may be transferred to 2e bypassing the treatment system. Accordingly, the ballast tank 2c may be depleted. Any negative impact of the ballast properties of the vessel caused by the depletion of ballast water from the ballast tank 2c may be mitigated compared to other solutions. Subsequently, e.g. preceded by a cleaning action of the ballast tank 2c, ballast water of the ballast tanks 2d and 2e may be transferred to the ballast tank 2c via the treatment system 10, e.g. such that the ballast tank 2c is partly or completely filled with treated ballast water. Any remaining ballast water or any part hereof of any of the tanks 2d and 2e may e.g. be transferred bypassing the treatment system 10 to one or more other ballast tanks of the vessel, such as any adjacent ballast tank, e.g. different from 2c, 2d, 2e. Alternatively, or additionally, any remaining ballast water or any part hereof of any of the tanks 2d and 2e may e.g. be discharged, e.g. via the treatment system 10, to the surrounding waters. Accordingly, the ballast tanks 2d and 2e may be depleted, e.g. one at a time. For instance, after depleting tank 2d, and after a possible cleaning action of the tank 2d being subsequent to depleting tank 2d, part, such as half, of the treated ballast water of the ballast tank 2c, which may be filled with treated ballast water, may be transferred to the tank 2d bypassing the treatment system 10. Accordingly, the ballast tanks 2c and 2d may be partly, e.g. half filled with treated ballast water. Subsequently, the ballast tank 2e may be depleted, e.g. to other ballast tanks and/or to the surrounding waters, e.g. via the treatment system, and subsequently, e.g. preceded by a cleaning action of tank 2e, a desired amount of ballast water may be loaded to the ballast tank 2e via the treatment system 10 from the surrounding waters and/or from other ballast tanks of the vessel according to desire. Accordingly, all of the ballast tanks 2c, 2d, 2e may be partly, such as half, filled with treated ballast water.

Fig. 5 schematically illustrates an embodiment of a treatment system 10, such as may be utilized according to the present invention. The treatment system 10 is explained by examples above.

Fig. 6 schematically illustrates an embodiment of a control system 31, such as may be utilized according to the present invention and/or may be utilized by an embodiment according to the present invention. The illustrated control system 31 comprises a controller 30 and control signal lines 34a, 34b, 34c from the controller 30 for controlling various parts of the ballast water management system, such as the system 1a, or 1c. For controlling the ballast water management system 1b, the control signal line 34b would be controlling the ballast pump 14 instead of the treatment pump 12, which treatment pump 12 is not illustrated in connection with the embodiment 1b. The control signal line 34c for controlling the heat application section 8 may be desired, e.g. if the treatment system 10 is a heat treatment system, e.g. and if adjustment of the heat applied to the heat application section 8 is desired. For one or more embodiments, the control signal line 34c may be omitted. The control signal line 34a for controlling the one, more, or all valves 35, which may be utilized by a ballast water management system such as 1a, 1b, or 1c, may be desired for setting the ballast water management system in a desired configuration. A desired configuration may for instance be a configuration enabling transfer of ballast water between a desired ballast tank and the surrounding waters or from one specific ballast tank to another specific ballast tank.

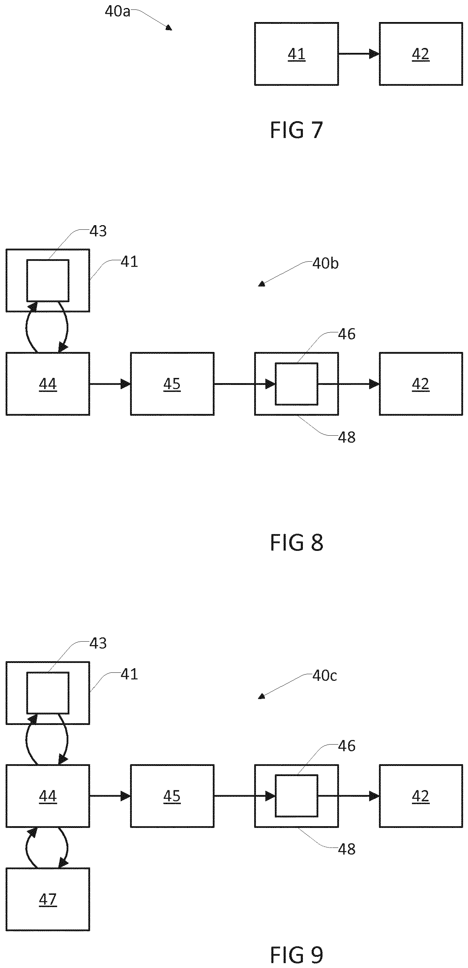

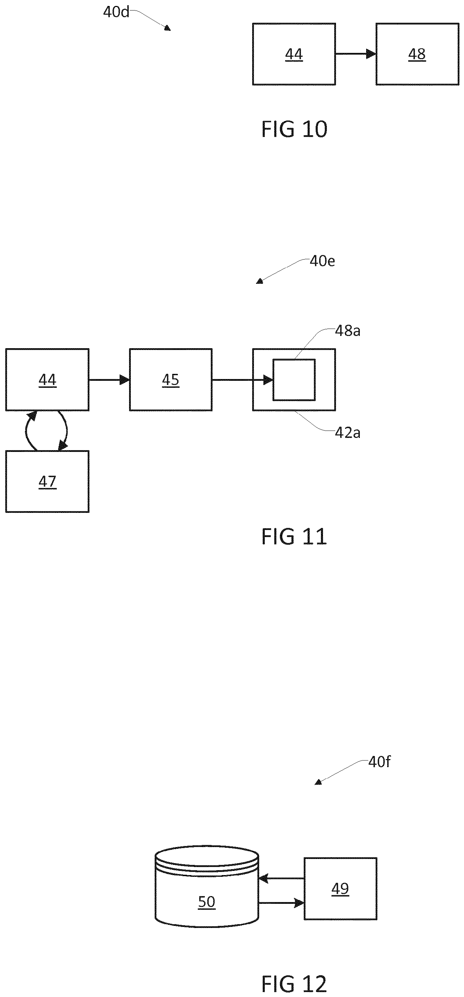

Fig. 7 schematically illustrates a first embodiment of a method 40a according to the present invention, such as according to the first aspect of the present invention, for management of ballast water of a vessel during voyage. The method 40a comprises: discharging 41 ballast water from the vessel to the surrounding waters via a treatment system, such as the treatment system 10 of any of Figs. 2-5, configured for treatment of ballast water; and loading 42 ballast water from the surrounding waters to the vessel. For the method 40a, the arrow from the process 41 to the process 42 indicates that the process 42 is carried out after the process 41 has terminated. Similar may be concluded where any single straight arrow is illustrated going from one process to another for any of Figs. 8-11. The method 40a may be carried out using any of the ballast water managements systems of Figs. 2-4. Fig. 8 schematically illustrates a second embodiment of a method 40b according to the present invention, such as according to the first aspect of the present invention for management of ballast water of a vessel during voyage. The method 40b comprises the process 41 and the process 42, as described in connection with Fig. 7. However, for the method of Fig. 8, the process of discharging 41 ballast water from the vessel to the surrounding waters via the treatment system comprises discharging 43 ballast water of a first ballast tank of the vessel to the surrounding waters via the treatment system. Furthermore, the method 40b comprises depleting 44 ballast water of the first ballast tank of the vessel. For the method 40b, the ballast water, which is being depleted from the first ballast tank by means of the process 44, is being discharged according to the process 43. The recursive arrows between the process 44 and the process 43, schematically illustrates that these processes are operated in dependence of each other. Similar applies to any other set of recursive arrows between process illustrated in any of Figs. 9 and 11. Accordingly, ballast water being removed from the first ballast tank as part of the depletion process 44 is continuously being discharged 43 from the first ballast tank to the surrounding waters via the treatment system, and hence discharged 41 from the vessel to the surrounding waters via the treatment system. Furthermore, the method 40b comprises loading and discharging 45 a first amount of ballast water to and from the first ballast tank. The process of loading and discharging 45 is carried out after the process of depleting 44 ballast water of the first ballast tank. Furthermore, the method 40b comprises transferring 46 ballast water from one or more ballast tanks comprising untreated ballast water to the first ballast tank via the treatment system. The process of transferring 46 is carried out in between the process of discharging 41 and the process of loading 42. The process of transferring 46 is carried out in between the process of loading and discharging 45 and the process of loading 42. The process of transferring 46 ballast water from one or more ballast tanks comprising untreated ballast water to the first ballast tank via the treatment system inherently comprises loading 48 ballast water to the first ballast tank via the treatment system. For any of the methods illustrated in any of Figs. 8, 9, or 11, any process illustrated as encasing another process may imply that inner process inherently comprises and/or forms part of the outer process. The process of loading 42, according to the method 40b, may comprise loading ballast water to at least one of the one or more ballast tanks being transferred from during the process 46. The method 40b may be carried out using any of the ballast water managements systems of Figs. 2-3.

Fig. 9 schematically illustrates a third embodiment of a method 40c according to the present invention, for management of ballast water of a vessel during voyage. The method 40c differs from the method 40b of Fig. 8 in that only part of the ballast water being removed from the first ballast tank by means of the process of depleting 44 is being discharged according to the process 43. The other part of the ballast water being removed from the first ballast tank by means of the process of depleting 44 is being transferred 47 to one or more other ballast tanks of the vessel, the one or more other ballast tanks comprising a second ballast tank. The method 40c may be carried out using any of the ballast water managements systems of Figs. 2-3.

Fig. 10 schematically illustrates a fourth embodiment of a method 40d according to the invention, for management of ballast water of a vessel during voyage. The method 40d comprises depleting 44 ballast water of a first ballast tank of the vessel; and, subsequently, loading 48 ballast water to the first ballast tank via a treatment system configured for treatment of ballast water. The method 40d may be carried out using any of the ballast water managements systems of Figs. 2-4.

Fig. 11 schematically illustrates a fifth embodiment of a method 40e according to the present invention, for management of ballast water of a vessel during voyage. The method 40e comprises depleting 44 ballast water of a first ballast tank of the vessel, which ballast water is being transferred 47 from the first ballast tank to one or more other ballast tanks of the vessel. Subsequently, a process of loading and discharging 45 a first amount of ballast water to and from the first ballast tank is carried out. Subsequently, a process of loading 48a ballast water from the surrounding waters to the first ballast tank via the treatment system is carried out. The process 48a inherently comprises a process of loading 42a ballast water from the surrounding waters to the vessel via the treatment system. The process 42a inherently comprises the process of loading 42 ballast water from the surrounding waters to the vessel. Furthermore, the process 48a inherently comprises the process of loading 48 ballast water to the first ballast tank via the treatment system. The method 40e may be carried out using any of the ballast water managements systems of Figs. 2-3.

Fig. 12 schematically illustrates a sixth embodiment of a method 40f according to the present invention, for management of ballast water of a vessel during voyage. The method 40f comprises obtaining a treatment status database 50 comprising treatment status for one or more or all ballast tanks of the vessel; and utilizing 49 information from the treatment status database for carrying out one or more ballast water operations during voyage. The one or more ballast water operations during voyage may for instance comprise discharging 41 and loading 42 ballast water from and to the vessel during voyage, e.g. as illustrated in any of Figs. 7-9, and/or transferring 46 and/or 47 ballast water between ballast tanks of the vessel during voyage, e.g. as illustrated in any of Figs. 8, 9, or 11.

For any claim enumerating several features, several of these features may be embodied by one and the same system. The mere fact that certain measures are recited in mutually different dependent claims or described in different embodiments does not indicate that a combination of these measures cannot be used to advantage.

Although particular embodiments have been shown and described, it will be understood that they are not intended to limit the claimed invention, and it will be obvious to those skilled in the art that various changes and modifications may be made without departing from the scope of the claimed inventions. The specification and drawings are, accordingly, to be regarded in an illustrative rather than restrictive sense.

It should be emphasized that the term "comprises/comprising" when used in the present disclosure is taken to specify the presence of stated features, integers, steps/processes or components but does not preclude the presence or addition of one or more other features, integers, steps, components or groups thereof.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims.

### List of references:

1a, 1b, 1c: various embodiments of a ballast water management system;
2a, 2b, 2c, 2d, 2e, 2f, 2g, 2h: ballast tanks;
2: may refer to any one, more, or all of: 2a, 2b, 2c, 2d, 2e, 2f, 2g, 2h;
3: piping system of the treatment system 10;
4: system inlet of the treatment system 10;
5: system outlet of the treatment system 10;
6: heat recovering section of the treatment system 10;
6a: primary inlet of the heat recovering section 6;
6b: primary outlet of the heat recovering section 6;
6c: secondary inlet of the heat recovering section 6;
6d: secondary outlet of the heat recovering section 6;
7a: first part of the heat recovering section 6;
7b: second part of the heat recovering section 6;
8: heat application section;
9: retention section;
10: heat treatment system;
11a, 11b, 11c: treatment system valves;
11: may refer to any one, more or all of: 11a, 11b, 11c;
12: treatment pump;
13a, 13b, 13c, 13d: treatment pump valves;
13: may refer to any one, more or all of: 13a, 13b, 13c, 13d;
14: ballast pump;
15a, 15b, 15c, 15d: ballast pump valves;
15: may refer to any one, more or all of: 15a, 15b, 15c, 15d;
16: ballast water intake of the vessel;
17: intake valve;
18: ballast water outlet of the vessel;
19: outlet valve;
20a, 20b, 20c, 20d, 20e, 20f, 20g, 20h: ballast tank selector valves;
20: may refer to any one, more or all of: 20a, 20b, 20c, 20d, 20e, 20f, 20g, 20h; 22a, 22b: flow direction valves;
22: may refer to any one or both of: 22a, 22b;
24a, 24b, 24c, 24d, 24e, 24f, 24g: ballast tank separator valves;
24: may refer to any one, more or all of: 24a, 24b, 24c, 24d, 24e, 24f, 24g;
25a, 25b: various embodiment of a ballasting system;
30: controller of a ballast water management system;
31: control system of a ballast water management system;
34a, 34b, 34c: control signal lines from the controller 30;
35: one, more, or all valves, which may be utilized by a ballast water management system, such as one, more, or all of the valves: 11, 13, 15, 17, 19, 20, 22, 24;
40a, 40b, 40c, 40d, 40e, 40f, 40g: various embodiments of a method for management of ballast water of a vessel during voyage;
41: process of discharging ballast water from the vessel to the surrounding waters via the treatment system;
42: process of loading ballast water from the surrounding waters to the vessel;
42a: process of loading ballast water from the surrounding waters to the vessel via the treatment system
43: process of discharging ballast water of the first ballast tank to the surrounding waters via the treatment system;
44: process of depleting ballast water of a first ballast tank of the vessel;
45: process of loading and discharging a first amount of ballast water to and from the first ballast tank, also denoted cleaning action;
46: process of transferring ballast water from one or more ballast tanks comprising untreated ballast water to the first ballast tank via the treatment system;
47: process of transferring ballast water from the first ballast tank to one or more other ballast tanks of the vessel;
48: process of loading ballast water to the first ballast tank via the treatment system;
48a: process of loading ballast water from the surrounding waters to the first ballast tank via the treatment system;
49: process of utilizing information from the treatment status database 50 for carrying out one or more ballast water operations during voyage;
50: treatment status database;

## Claims

1. A method (40b, 40c) for management of ballast water of a vessel during voyage, the method (40b, 40c) comprising:
discharging (41, 43) ballast water from the vessel to the surrounding waters via a treatment system (10) configured for treatment of ballast water;
depleting (44) ballast water of a first ballast tank (2a) of the vessel;
loading and discharging (45) a first amount of ballast water to and from the first ballast tank (2a) after the process (44) of depleting ballast water of the first ballast tank (2a), the first amount of ballast water being treated ballast water while being loaded to the first ballast tank (2a); and
loading (42, 42a, 48a) ballast water from the surrounding waters to the vessel after the process of discharging (41, 43) ballast water from the vessel to the surrounding waters via the treatment system (10).

2. The method (40b, 40c) according to claim 1, wherein the first amount of treated ballast water corresponds to at least two percent of the volume of the first ballast tank (2a) and/or is at least five times the amount of ballast water receding in the first ballast tank (2a) immediately after the process (44) of depleting ballast water of the first ballast tank (2a).

3. The method (40b, 40c) according to claim 1 or 2, wherein the first amount of treated ballast water is less than 20 times the amount of ballast water receding in the first ballast tank (2a) immediately after the process (44) of depleting ballast water of the first ballast tank and/or wherein the first amount of treated ballast water corresponds to less than 20 percent of the volume of the first ballast tank (2a).

4. The method (40b, 40c) according to any of the preceding claims, wherein the process (45) of loading and discharging is carried out iteratively.

5. The method (40b, 40c) according to any of the preceding claims, wherein the process (41, 43) of discharging ballast water from the vessel to the surrounding waters via the treatment system (10) comprises discharging (43) ballast water of the first ballast tank (2a) to the surrounding waters via the treatment system (10).

6. The method (40b, 40c) according to claim 5, wherein the process of discharging (43) ballast water of the first ballast tank (2a) to the surrounding waters via the treatment system (10) is carried out such that it comprises the process of depleting (44) ballast water of a first ballast tank (2a), wherein the first ballast tank (2a) is depleted (44) to the surrounding waters via the treatment system (10).

7. The method (40b, 40c) according to any of the preceding claims, comprising transferring (47) ballast water of the first ballast tank (2a) to one or more other ballast tanks (2b, 2c, 2d, 2e, 2f, 2g, 2h) of the vessel, the one or more other ballast tanks comprising a second ballast tank (2b).

8. The method (40b, 40c) according to claim 7, wherein the second ballast tank (2b) is adjacent to the first ballast tank (2a).

9. The method (40b, 40c) according to any of the preceding claims, wherein the process (41, 43) of discharging ballast water from the vessel to the surrounding waters via the treatment system (10) comprises discharging a second amount of ballast water from the vessel to the surrounding waters via the treatment system (10), and wherein the process (42, 42a, 48a) of loading ballast water from the surrounding waters to the vessel comprises loading the second amount of ballast water from the surrounding waters to the vessel.

10. The method (40b, 40c) according to any of the preceding claims, carried out such that the vessel has the same amount of ballast water after the process (42, 42a, 48a) of loading ballast water from the surrounding waters to the vessel as prior to the process (41, 43) of discharging ballast water from the vessel to the surrounding waters via the treatment system (10).

11. The method (40b, 40c) according to any of the preceding claims, wherein the process (42, 42a, 48a) of loading ballast water from the surrounding waters to the vessel comprises loading (42a, 48a) ballast water from the surrounding waters to the vessel via the treatment system.

12. The method (40b, 40c) according to any of the preceding claims, comprising transferring (46) ballast water from one or more ballast tanks (2b, 2c, 2d, 2e, 2f, 2g, 2h) comprising untreated ballast water to the first ballast tank (2a) via the treatment system (10), wherein the process (46) of transferring is carried out in between the process (41, 43) of discharging ballast water from the vessel to the surrounding waters via the treatment system and the process (42, 42a, 48a) of loading ballast water from the surrounding waters to the vessel.

13. The method (40b, 40c) according to claim 12, wherein the process (46) of transferring ballast water from one or more ballast tanks (2b, 2c, 2d, 2e, 2f, 2g, 2h) comprising untreated ballast water to the first ballast tank (2a) via the treatment system (10) comprises transferring from a ballast tank (2b, 2c) being adjacent to the first ballast tank (2a).

14. The method (40b, 40c) according to any of the preceding claims, carried out such that at least a third amount of treated ballast water is contained by the vessel after the process (42, 42a, 48a) of loading ballast water from the surrounding waters to the vessel, wherein the third amount of treated ballast water corresponds to an amount of ballast water to be discharged at the forthcoming port operation of the vessel.

15. The method (40b, 40c) according to any of the preceding claims, wherein the treatment system (10) is configured for heat treatment of ballast water.

16. The method (40b, 40c) according to any of the preceding claims, wherein the vessel comprises a ballast pump (14) configured for providing ballast water to the vessel and/or discharging ballast water from the vessel, and wherein the process (41, 43) of discharging ballast water from the vessel to the surrounding waters via the treatment system is carried out using a treatment pump (12) having a capacity being at most 50% of the capacity of the ballast pump (14).

## Patentansprüche

1. Verfahren (40b, 40c) zur Verwaltung von Ballastwasser eines Schiffes während der Fahrt, wobei das Verfahren (40b, 40c) umfasst:
Ablassen (41, 43) von Ballastwasser aus dem Schiff in die umgebenden Gewässer über ein Behandlungssystem (10), das zur Behandlung von Ballastwasser konfiguriert ist;
Leeren (44) von Ballastwasser eines ersten Ballasttanks (2a) des Schiffes;
Laden und Ablassen (45) einer ersten Menge Ballastwasser in den und aus dem ersten Ballasttank (2a) nach dem Prozess (44) des Leerens von Ballastwasser des ersten Ballasttanks (2a), wobei die erste Menge Ballastwasser behandeltes Ballastwasser ist, während es in den ersten Ballasttank (2a) geladen wird; und
Laden (42, 42a, 48a) von Ballastwasser aus den umgebenden Gewässern in das Schiff nach dem Prozess des Ablassens (41, 43) von Ballastwasser aus dem Schiff in die umgebenden Gewässer über das Behandlungssystem (10).

2. Verfahren (40b, 40c) nach Anspruch 1, wobei die erste Menge behandeltes Ballastwasser mindestens zwei Prozent des Volumens des ersten Ballasttanks (2a) entspricht, und/oder mindestens das Fünffache der Menge Ballastwasser ist, die unmittelbar nach dem Prozess (44) des Leerens von Ballastwasser des ersten Ballasttanks (2a) im ersten Ballasttank (2a) schwindet.

3. Verfahren (40b, 40c) nach Anspruch 1 oder 2, wobei die erste Menge behandeltes Ballastwasser weniger als das 20-Fache der Menge Ballastwasser ist, die unmittelbar nach dem Prozess (44) des Leerens von Ballastwasser des ersten Ballasttanks im ersten Ballasttank (2a) schwindet, und/oder wobei die erste Menge behandeltes Ballastwasser weniger als 20 Prozent des Volumens des ersten Ballasttanks (2a) entspricht.

4. Verfahren (40b, 40c) nach einem der vorstehenden Ansprüche, wobei der Prozess (45) des Ladens und Ablassens iterativ ausgeführt wird.

5. Verfahren (40b, 40c) nach einem der vorstehenden Ansprüche, wobei der Prozess (41, 43) des Ablassens von Ballastwasser aus dem Schiff in die umgebenden Gewässer über das Behandlungssystem (10) das Ablassen (43) von Ballastwasser des ersten Ballasttanks (2a) in die umgebenden Gewässer über das Behandlungssystem (10) umfasst.

6. Verfahren (40b, 40c) nach Anspruch 5, wobei der Prozess des Ablassens (43) von Ballastwasser des ersten Ballasttanks (2a) in die umgebenden Gewässer über das Behandlungssystem (10) ausgeführt wird, sodass er den Prozess des Leerens (44) von Ballastwasser eines ersten Ballasttanks (2a) umfasst, wobei der erste Ballasttank (2a) über das Behandlungssystem (10) in die umgebenden Gewässer geleert (44) wird.

7. Verfahren (40b, 40c) nach einem der vorstehenden Ansprüche, das das Transferieren (47) von Ballastwasser des ersten Ballasttanks (2a) in einen oder mehrere andere Ballasttanks (2b, 2c, 2d, 2e, 2f, 2g, 2h) des Schiffes umfasst, wobei der eine oder mehrere andere Ballasttanks einen zweiten Ballasttank (2b) umfassen.

8. Verfahren (40b, 40c) nach Anspruch 7, wobei der zweite Ballasttank (2b) an den ersten Ballasttank (2a) angrenzt.

9. Verfahren (40b, 40c) nach einem der vorstehenden Ansprüche, wobei der Prozess (41, 43) des Ablassens von Ballastwasser aus dem Schiff in die umgebenden Gewässer über das Behandlungssystem (10) das Ablassen einer zweiten Menge Ballastwasser aus dem Schiff in die umgebenden Gewässer über das Behandlungssystem (10) umfasst, und wobei der Prozess (42, 42a, 48a) des Ladens von Ballastwasser aus den umgebenden Gewässern in das Schiff das Laden der zweiten Menge Ballastwasser aus den umgebenden Gewässern in das Schiff umfasst.

10. Verfahren (40b, 40c) nach einem der vorstehenden Ansprüche, das ausgeführt wird, sodass das Schiff nach dem Prozess (42, 42a, 48a) des Ladens von Ballastwasser aus den umgebenden Gewässern in das Schiff dieselbe Menge Ballastwasser aufweist wie vor dem Prozess (41, 43) des Ablassens von Ballastwasser aus dem Schiff in die umgebenden Gewässer über das Behandlungssystem (10).

11. Verfahren (40b, 40c) nach einem der vorstehenden Ansprüche, wobei der Prozess (42, 42a, 48a) des Ladens von Ballastwasser aus den umgebenden Gewässern in das Schiff das Laden (42a, 48a) von Ballastwasser aus den umgebenden Gewässern in das Schiff über das Behandlungssystem umfasst.

12. Verfahren (40b, 40c) nach einem der vorstehenden Ansprüche, das das Transferieren (46) von Ballastwasser aus einem oder mehreren Ballasttanks (2b, 2c, 2d, 2e, 2f, 2g, 2h), die unbehandeltes Ballastwasser umfassen, in den ersten Ballasttank (2a) über das Behandlungssystem (10) umfasst, wobei der Prozess (46) des Transferierens zwischen dem Prozess (41, 43) des Ablassens von Ballastwasser aus dem Schiff in die umgebenden Gewässer über das Behandlungssystem und dem Prozess (42, 42a, 48a) des Ladens von Ballastwasser aus den umgebenden Gewässern in das Schiff ausgeführt wird.

13. Verfahren (40b, 40c) nach Anspruch 12, wobei der Prozess (46) des Transferierens von Ballastwasser aus einem oder mehreren Ballasttanks (2b, 2c, 2d, 2e, 2f, 2g, 2h), die unbehandeltes Ballastwasser umfassen, in den ersten Ballasttank (2a) über das Behandlungssystem (10) das Transferieren aus einem Ballasttank (2b, 2c) umfasst, der an den ersten Ballasttank (2a) angrenzt.

14. Verfahren (40b, 40c) nach einem der vorstehenden Ansprüche, das ausgeführt wird, sodass nach dem Prozess (42, 42a, 48a) des Ladens von Ballastwasser aus den umgebenden Gewässern in das Schiff mindestens eine dritte Menge behandeltes Ballastwasser im Schiff enthalten ist, wobei die dritte Menge behandeltes Ballastwasser einer Menge Ballastwasser entspricht, die bei der bevorstehenden Hafenoperation des Schiffes abzulassen ist.

15. Verfahren (40b, 40c) nach einem der vorstehenden Ansprüche, wobei das Behandlungssystem (10) zur Wärmebehandlung von Ballastwasser konfiguriert ist.

16. Verfahren (40b, 40c) nach einem der vorstehenden Ansprüche, wobei das Schiff eine Ballastpumpe (14) umfasst, die zum Bereitstellen von Ballastwasser für das Schiff und/oder Ablassen von Ballastwasser aus dem Schiff konfiguriert ist, und wobei der Prozess (41, 43) des Ablassens von Ballastwasser aus dem Schiff in die umgebenden Gewässer über das Behandlungssystem unter Verwendung einer Behandlungspumpe (12) ausgeführt wird, die eine Kapazität aufweist, die höchstens 50% der Kapazität der Ballastpumpe (14) beträgt.

## Revendications

1. Procédé (40b, 40c) de gestion d'eau de ballast d'un navire pendant le voyage, le procédé (40b, 40c) comprenant :
l'évacuation (41, 43) de l'eau de ballast du navire dans les eaux environnantes via un système de traitement (10) configuré pour le traitement de l'eau de ballast ;
le vidage (44) de l'eau de ballast d'un premier réservoir de ballast (2a) du navire ;
le chargement et l'évacuation (45) d'une première quantité d'eau de ballast dans et depuis le premier réservoir de ballast (2a) après le processus (44) de vidage de l'eau de ballast du premier réservoir de ballast (2a), la première quantité d'eau de ballast étant de l'eau de ballast traitée pendant son chargement dans le premier réservoir de ballast (2a) ; et
le chargement (42, 42a, 48a) d'eau de ballast des eaux environnantes dans le navire après le processus d'évacuation (41, 43) de l'eau de ballast du navire dans les eaux environnantes via le système de traitement (10).

2. Procédé (40b, 40c) selon la revendication 1, dans lequel la première quantité d'eau de ballast traitée correspond à au moins deux pour cent du volume du premier réservoir de ballast (2a) et/ou est au moins cinq fois supérieure à la quantité d'eau de ballast se retirant dans le premier réservoir de ballast (2a) juste après le processus (44) de vidage de l'eau de ballast du premier réservoir de ballast (2a).

3. Procédé (40b, 40c) selon la revendication 1 ou 2, dans lequel la première quantité d'eau de ballast traitée est inférieure à 20 fois la quantité d'eau de ballast se retirant dans le premier réservoir de ballast (2a) juste après le processus (44) de vidage de l'eau de ballast du premier réservoir de ballast et/ou dans lequel la première quantité d'eau de ballast traitée correspond à moins de 20 pour cent du volume du premier réservoir de ballast (2a).

4. Procédé (40b, 40c) selon l'une quelconque des revendications précédentes, dans lequel le processus (45) de chargement et d'évacuation est réalisé de manière itérative.

5. Procédé (40b, 40c) selon l'une quelconque des revendications précédentes, dans lequel le processus (41, 43) d'évacuation de l'eau de ballast du navire dans les eaux environnantes via le système de traitement (10) comprend l'évacuation (43) de l'eau de ballast du premier réservoir de ballast (2a) dans les eaux environnantes via le système de traitement (10).

6. Procédé (40b, 40c) selon la revendication 5, dans lequel le processus d'évacuation (43) de l'eau de ballast du premier réservoir de ballast (2a) dans les eaux environnantes via le système de traitement (10) est réalisé de telle sorte qu'il comprend le processus de vidage (44) de l'eau de ballast d'un premier réservoir de ballast (2a), dans lequel le premier réservoir de ballast (2a) est vidé (44) dans les eaux environnantes via le système de traitement (10).

7. Procédé (40b, 40c) selon l'une quelconque des revendications précédentes, comprenant le transfert (47) de l'eau de ballast du premier réservoir de ballast (2a) à un ou plusieurs autres réservoirs de ballast (2b, 2c, 2d, 2e, 2f, 2g, 2h) du navire, les un ou plusieurs autres réservoirs de ballast comprenant un second réservoir de ballast (2b).

8. Procédé (40b, 40c) selon la revendication 7, dans lequel le second réservoir de ballast (2b) est adjacent au premier réservoir de ballast (2a).

9. Procédé (40b, 40c) selon l'une quelconque des revendications précédentes, dans lequel le processus (41, 43) d'évacuation de l'eau de ballast du navire dans les eaux environnantes via le système de traitement (10) comprend l'évacuation d'une deuxième quantité d'eau de ballast du navire dans les eaux environnantes via le système de traitement (10), et dans lequel le processus (42, 42a, 48a) de chargement d'eau de ballast des eaux environnantes dans le navire comprend le chargement de la deuxième quantité d'eau de ballast des eaux environnantes dans le navire.

10. Procédé (40b, 40c) selon l'une quelconque des revendications précédentes, réalisé de telle sorte que le navire présente la même quantité d'eau de ballast après le processus (42, 42a, 48a) de chargement d'eau de ballast des eaux environnantes au navire qu'avant le processus (41, 43) d'évacuation de l'eau de ballast du navire dans les eaux environnantes via le système de traitement (10).

11. Procédé (40b, 40c) selon l'une quelconque des revendications précédentes, dans lequel le processus (42, 42a, 48a) de chargement d'eau de ballast des eaux environnantes au navire comprend le chargement (42a, 48a) d'eau de ballast des eaux environnantes au navire via le système de traitement.

12. Procédé (40b, 40c) selon l'une quelconque des revendications précédentes, comprenant le transfert (46) d'eau de ballast d'un ou plusieurs réservoirs de ballast (2b, 2c, 2d, 2e, 2f, 2g, 2h) comprenant de l'eau de ballast non traitée vers le premier réservoir de ballast (2a) via le système de traitement (10), dans lequel le processus (46) de transfert est réalisé entre le processus (41, 43) d'évacuation de l'eau de ballast du navire dans les eaux environnantes via le système de traitement et le processus (42, 42a, 48a) de chargement de l'eau de ballast des eaux environnantes au navire.

13. Procédé (40b, 40c) selon la revendication 12, dans lequel le processus (46) de transfert d'eau de ballast d'un ou plusieurs réservoirs de ballast (2b, 2c, 2d, 2e, 2f, 2g, 2h) comprenant de l'eau de ballast non traitée vers le premier réservoir de ballast (2a) via le système de traitement (10) comprend le transfert depuis un réservoir de ballast (2b, 2c) adjacent au premier réservoir de ballast (2a).

14. Procédé (40b, 40c) selon l'une quelconque des revendications précédentes, réalisé de telle sorte qu'au moins une troisième quantité d'eau de ballast traitée soit contenue par le navire après le processus (42, 42a, 48a) de chargement d'eau de ballast des eaux environnantes au navire, dans lequel la troisième quantité d'eau de ballast traitée correspond à une quantité d'eau de ballast à évacuer lors de la prochaine opération portuaire du navire.

15. Procédé (40b, 40c) selon l'une quelconque des revendications précédentes, dans lequel le système de traitement (10) est configuré pour le traitement thermique de l'eau de ballast.

16. Procédé (40b, 40c) selon l'une quelconque des revendications précédentes, dans lequel le navire comprend une pompe de ballast (14) configurée pour fournir de l'eau de ballast au navire et/ou évacuer l'eau de ballast du navire, et dans lequel le processus (41, 43) d'évacuation de l'eau de ballast du navire dans les eaux environnantes via le système de traitement est réalisé en utilisant une pompe de traitement (12) présentant une capacité correspondant au plus à 50 % de la capacité de la pompe de ballast (14).
